# EUROPÄISCHE PATENTSCHRIFT

(11) **EP 1 286 875 B1**
(45) Veröffentlichungstag und Bekanntmachung des Hinweises auf die Patenterteilung: **11.08.2004**
(21) Anmeldenummer: 01936013.0
(22) Anmeldetag: 28.04.2001
(51) Int. Cl.: B61D 19/02, B61D 17/04, B62D 65/00

(54) **SCHWENKSCHIEBETÜR FÜR FAHRZEUGE ZUR PERSONENBEFÖRDERUNG**
SWINGING-SLIDING DOOR FOR VEHICLES FOR TRANSPORTING PEOPLE
PORTE LOUVOYANTE COULISSANTE SUR DES VEHICULES DESTINES AU TRANSPORT DE PERSONNES

(30) Priorität: 06.05.2000 DE 10022051
(43) Veröffentlichungstag der Anmeldung: 05.03.2003
(73) Patentinhaber: Gebr. Bode GmbH & Co. KG, 34123 Kassel (DE)
(72) Erfinder: SCHWARZ, Klaus-Peter, 34277 Fuldabrück (DE)
(74) Vertreter: Feder, Wolf-Dietrich, Dr. Dipl.-Phys.
(86) Internationale Anmeldenummer: PCT/DE2001/001640
(87) Internationale Veröffentlichungsnummer: WO 2001/085519

(56) Entgegenhaltungen:
- EP-A- 0 990 573
- WO-A-97/12801
- DD-A- 99 537
- DE-U- 29 703 868
- FR-A- 2 706 406

## Beschreibung

Die Erfindung betrifft eine Schwenkschiebetür für Fahrzeuge zur Personenbeförderung mit den Merkmalen aus dem Oberbegriff des Patentanspruchs 1. Derartige Schwenkschiebetüren sind an sich bekannt und in der Form einer zweiflügligen Schwenkschiebetür, beispielsweise in DE 43 16 253 A1 beschrieben.

Es sind auch aus der WO 97/12801 eine Vorrichtung und ein Verfahren für den Einbau von vormantierten Baueinheiten von Schwenkschiebetüren in Fahrzeugen zur Personenbeförderung bekannt, die in die Türöffnung einsetzbar und dort befestigbar sind.

Der Einbau derartiger Schwenkschiebetüren, beispielsweise in die Waggons von Eisenbahnen, Schnellbahnen, Straßenbahnen und dergleichen ist mit einem erheblichen Aufwand verbunden, wenn die einzelnen Teile der Schwenkschiebetür, also die Türblätter sowie die Antriebs- und Führungsvorrichtungen einzeln an und im Türrahmen befestigt werden müssen und dann das ganze System so justiert werden muß, daß ein zuverlässiges Öffnen und Schließen der Tür sichergestellt ist.

Der Erfindung liegt die Aufgabe zugrunde eine Schwenkschiebetür mit den Merkmalen aus dem Oberbegriff des Patentanspruchs 1 so auszubilden, daß die Montage und Justierung erheblich vereinfacht wird und dadurch auch die Einbaukosten der Tür herabgesetzt werden.

Die Lösung dieser Aufgabe erfolgt mit einer Schwenkschiebetür, die zusätzlich die Merkmale aus dem kennzeichnenden Teil des Patentanspruchs 1 aufweist. Vorteilhafte Weiterbildungen dieser Tür sind in den Ansprüchen 2 bis 4 beschrieben. Ein Transportrahmen, der die Montage und Justierung der Schwenkschiebetür nach den Ansprüchen 1 bis 4 noch weiter vereinfacht, ist Gegenstand von Anspruch 5, wobei vorteilhafte Weiterbildungen dieses Transportrahmens in den Ansprüchen 6 bis 10 beschrieben sind und ein Verfahren zur Montage einer Schwenkschiebetür nach den Ansprüchen 1 bis 4 unter Verwendung des Transportrahmens nach einem der Ansprüche 5 bis 10 ist Gegenstand von Anspruch 11.

Der Grundgedanke der Erfindung besteht zunächst darin, die Schwenkschiebetür im wesentlichen aus zwei Montageeinheiten aufzubauen, die nacheinander am bzw. im Türrahmen befestigt und miteinander verbunden werden, wobei mit der ersten Montageeinheit zunächst das gesamte Antriebs- und Führungssystem eingebaut wird und mit der zweiten Montageeinheit ein geschlossener Portalrahmen eingesetzt wird, an dem das Türblatt bzw. die Türblätter bereits vorher lösbar befestigt sind. Nach dem Einbau dieser beiden Montageeinheiten und ihrer Verbindung miteinander, werden die Befestigungsmittel zwischen Türblatt und Portalrahmen gelöst. Wie weiter unten anhand eines Ausführungsbeispiels näher erläutert, kann zum Einbau der zweiten Montageeinheit ein besonderer Transportrahmen verwendet werden, an dem die zweite Montageeinheit zunächst befestigt ist. Dieser Transportrahmen wird nach dem Einbringen der ersten Montageeinheit zeitweise im Türrahmen fixiert, wodurch die Verbindung der beiden Montageeinheiten und die Justierung erheblich erleichtert werden. Nach Beendigung des Einbaus wird der Transportrahmen abgebaut und entfernt.

Im folgenden wird anhand der beigefügten Zeichnungen eine Schwenkschiebetür nach der Erfindung, sowie ein Transportrahmen zu ihrer Montage und das Verfahren zum Einbau und zur Justierung der Schwenkschiebetür näher erläutert.

In den Zeichnungen zeigen:
Fig. 1 eine zweiflüglige Schwenkschiebetür in einer Ansicht von innen ohne die im Bereich F oberhalb der Türblätter im Türrahmen angeordneten Antriebs- und Führungsvorrichtungen;
Fig. 2 eine Ansicht der Schwenkschiebetür nach Fig. 1 in Richtung Z mit den Antriebs- und Führungsvorrichtungen für die Türblätter;
Fig. 2A den Bereich Z1 aus Fig. 2 bei geöffneter Tür;
Fig. 3 einen Schnitt nach der Linie A-A in Fig. 1;
Fig. 4 einen Schnitt nach der Linie B-B in Fig. 1;
Fig. 5 einen Schnitt nach der Linie C-C in Fig. 1;
Fig. 6 einen Schnitt nach der Linie D-D in Fig. 1;
Fig. 7 einen Schnitt nach der Linie E-E in Fig. 1 in vergrößerter Darstellung mit Teilen der Antriebs- und Führungsvorrichtungen;
Fig. 8 einen Transportrahmen zur Montage der Schwenkschiebetür nach Fig. 1 bis 7 in einer Seitenansicht;
Fig. 9 den Transportrahmen nach Fig. 8 in einer Frontansicht;
Fig. 10 in einer vergrößerten und vereinfachten Teildarstellung den Transportrahmen nach Fig. 8 und 9 in einer Ansicht von oben mit Teilen der daran befestigten Türblätter und des Portalrahmens;
Fig. 11 einen Teilausschnitt des Transportrahmens analog Fig. 10 mit einer Variante bezgl. der Befestigungsart der Türblätter im Fingerschutzbereich;
Fig. 12 im horizontalen Teilschnitt analog Fig. 5 einen Teil des mit dem Portalrahmen verbundenen Türblatts;
Fig. 12A das Türblatt gemäß Fig. 12 in einer Ansicht von unten im Bereich der Befestigungsschraube.

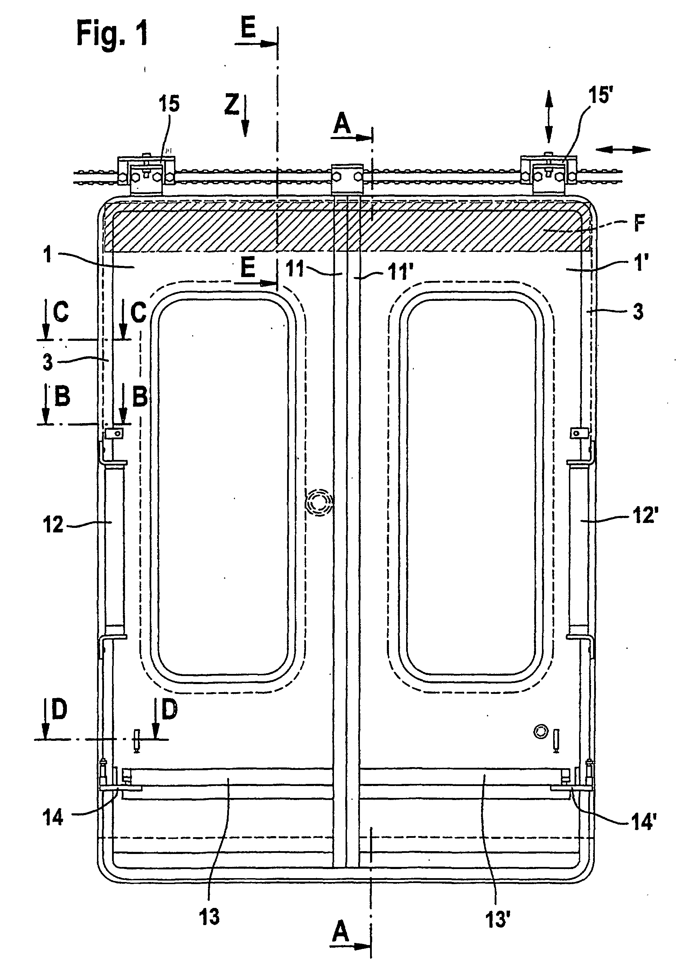

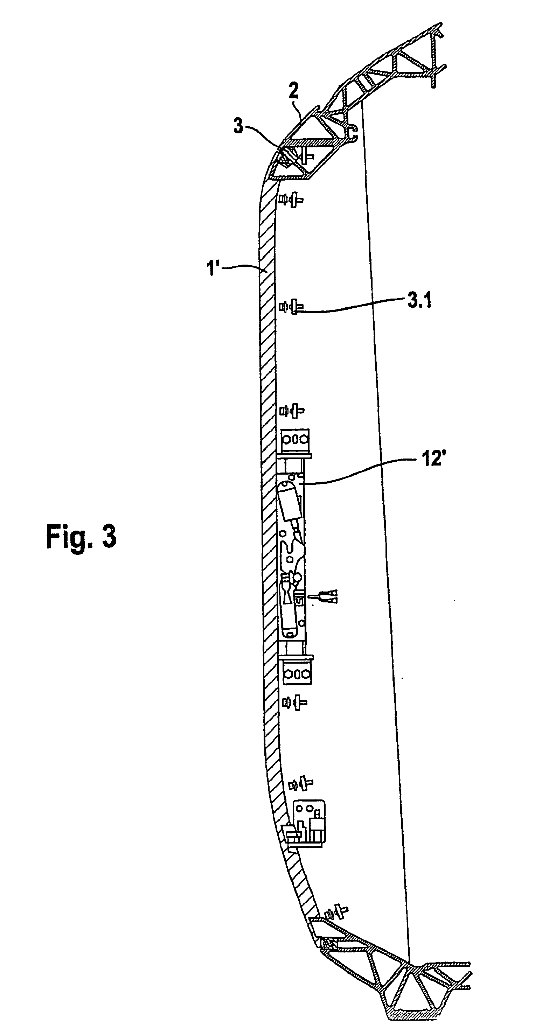

Die Fig. 1 bis 7 zeigen eine in einem nicht dargestellten Fahrzeug eingebaute zweiflüglige Schwenkschiebetür einer Bauart, wie sie in der den gleichen Zeitrang besitzenden Patentanmeldung der gleichen Anmelderin mit der Bezeichnung "Zweiflüglige Schwenkschiebetür für Fahrzeuge zur Personenbeförderung" genauer beschrieben ist.

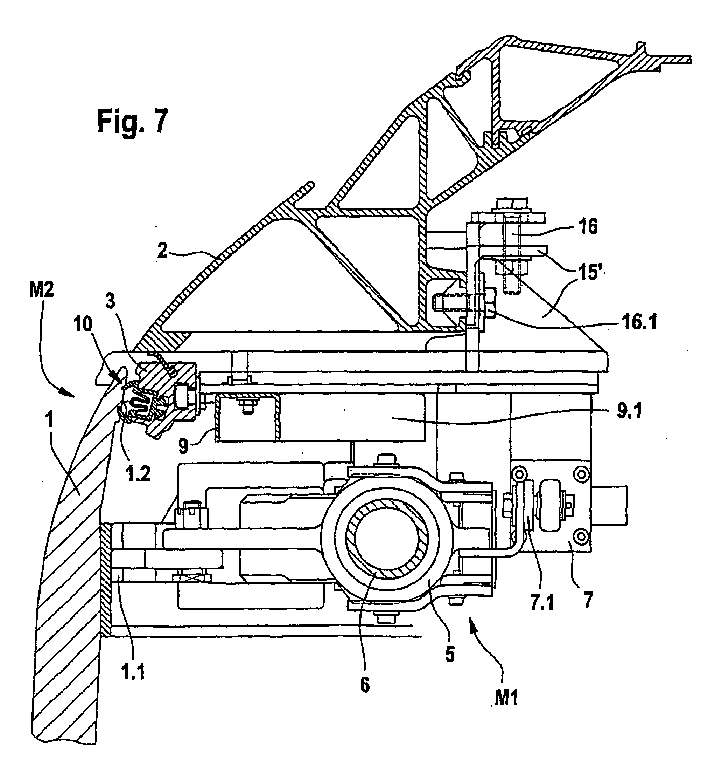

In Fig. 1 sind aus Gründen der Übersichtlichkeit die Antriebs- und Führungsvorrichtungen nicht dargestellt. Sie sind grundsätzlich im schraffierten Bereich F angeordnet und über Befestigungswinkel 15 bzw. 15' mit dem Türrahmen 2 verbunden (siehe auch Fig. 7).

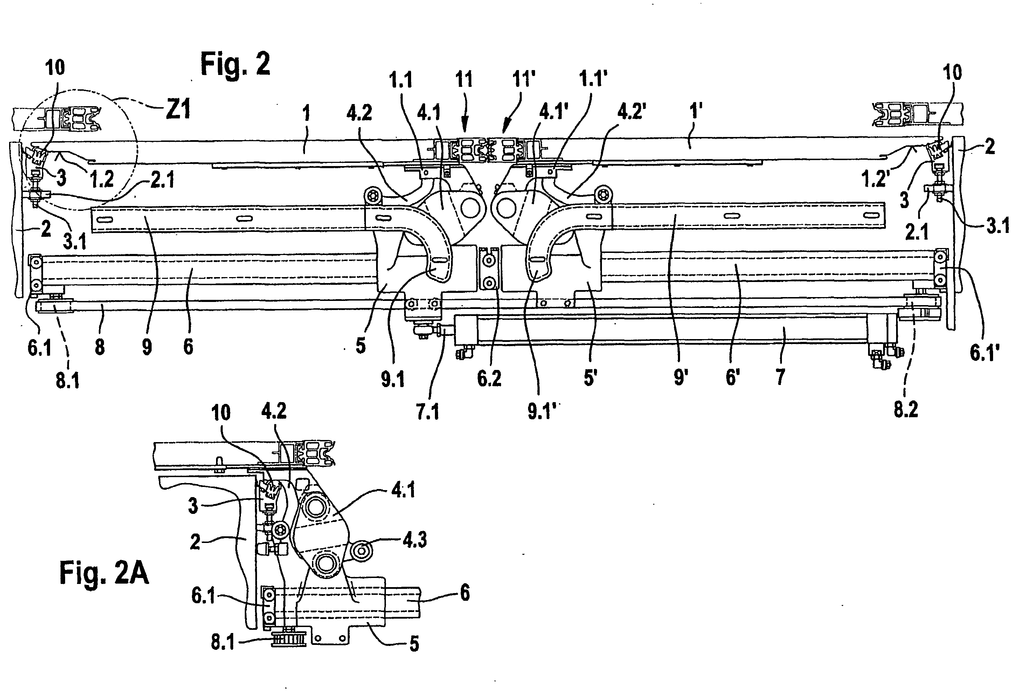

Die beiden Türblätter 1 und 1' sind jeweils über ein Parallelogrammgestänge, das aus einem Schwenkarm 4.1 bzw. 4.1' und einem gekrümmten Stützarm 4.2 bzw. 4.2' besteht, mit einem Tragglied 5 bzw. 5' verbunden, welches beispielsweise als Kugelhülse ausgebildet sein kann und an einem als Rundstange ausgebildeten horizontal in Fahrzeuglängsrichtung verlaufenden Führungselement 6 bzw. 6' verschiebbar geführt ist. Das Führungselement 6 bzw. 6' ist über Befestigungsvorrichtungen 6.1, 6.1' und 6.2 fest mit dem Türrahmen 2 verbunden. Der Schwenkarm 4.1 bzw. 4.1' ist mit einem am Türblatt angeordneten Tragarm 1.1 bzw. 1.1' einerseits und dem Tragglied 5 bzw. 5' andererseits jeweils über eine vertikal stehende Drehachse verbunden. Ebenso ist der Stützarm 4.2 bzw. 4.2' jeweils über vertikal stehende Drehachsen mit dem Tragarm 1.1 bzw. 1.1' und dem Tragglied 5 bzw. 5' verbunden. Am Schwenkarm 4.1 ist, wie aus Fig. 2A ersichtlich, ein Führungshebel mit einer Steuerrolle 4.3 angeordnet, die in eine fest mit dem Türrahmen 2 verbundene Führungsschiene 9 bzw. 9' eingreift, wobei die Führungsschienen 9 und 9' parallel zu den Führungselementen 6 und 6' verlaufen und an ihren einander zugewandten Enden in einer Krümmung 9.1 bzw. 9.1' zum Fahrzeuginneren hin geführt sind.

Die Antriebsvorrichtung der Tür besitzt einen Pneumatikzylinder 7, dessen Abtriebselement 7.1 mit dem Tragglied 5 verbunden ist, das seinerseits mit dem einen Trum eines parallel zu den Führungselementen 6 und 6' gerührten Zahnriemens 8 verbunden ist. Der Zahnriemen 8 läuft an seinen beiden Enden über Umlenkrollen 8.1 und 8.2 und an seinem anderen Trum ist das Tragglied 5' befestigt, so daß bei einer Bewegung des Traggliedes 5 vom Pneumatikzylinder 7 aus das Tragglied 5' eine gegenläufige Bewegung ausführt.

Die Türblätter 1 und 1' besitzen an den voneinander abgewandten Innenkanten sowie an der oberen und unteren Innenkante ebene Dichtungsflächen 1.2 bzw. 1.2', die unter einer vorgegebenen Abschrägung zur vertikalen Türebene verlaufen. In den Türrahmen 2 ist ein umlaufender Portalrahmen 3 eingesetzt und über Schraubbefestigungen 3.1 mit fest am Türrahmen 2 angeordneten Befestigungslaschen 2.1 verbunden. An der nach außen weisenden Seite des Portalrahmens 3 ist eine vollständig umlaufende aufblasbare Dichtung 10 angeordnet, an die sich, wie in Fig. 2 dargestellt, im geschlossenen Zustand der Tür die Dichtungsflächen 1.2 bzw. 1.2' der Türblätter anlegen. Nach dem Aufblasen der umlaufenden Dichtung 10 mittels nicht dargestellter Einrichtungen, ist entlang der Außenkanten der beiden Türblätter 1 und 1' eine gute Abdichtung gegen Druckschwankungen gewährleistet. An den im geschlossenen Zustand einander direkt gegenüberliegenden vertikalen Innenkanten 1.3 bzw. 1.3' der Türblätter 1 bzw. 1' sind Fingerschutzgummis 11 bzw. 11' angeordnet, die ebenfalls als aufblasbare Dichtungsprofile ausgebildet sind und weiter unten genauer beschrieben werden. Durch Aufblasen der Dichtungsprofile 11 und 11' durch ebenfalls nicht dargestellte Einrichtungen ist auch der Bereich des Spaltes zwischen den beiden Türblättern 1 und 1' gegen Druckschwankungen abgedichtet.

Wie aus den Fig. 1, 3 und 4 ersichtlich, sind an den vertikalen Seitenkanten des Türrahmens 2 Verriegelungseinrichtungen 12 bzw. 12' bekannter Bauart angeordnet, durch welche die beiden Türblätter 1 bzw. 1' im geschlossenen Zustand der Tür mittels Drehfallenverriegelungen verriegelt werden.

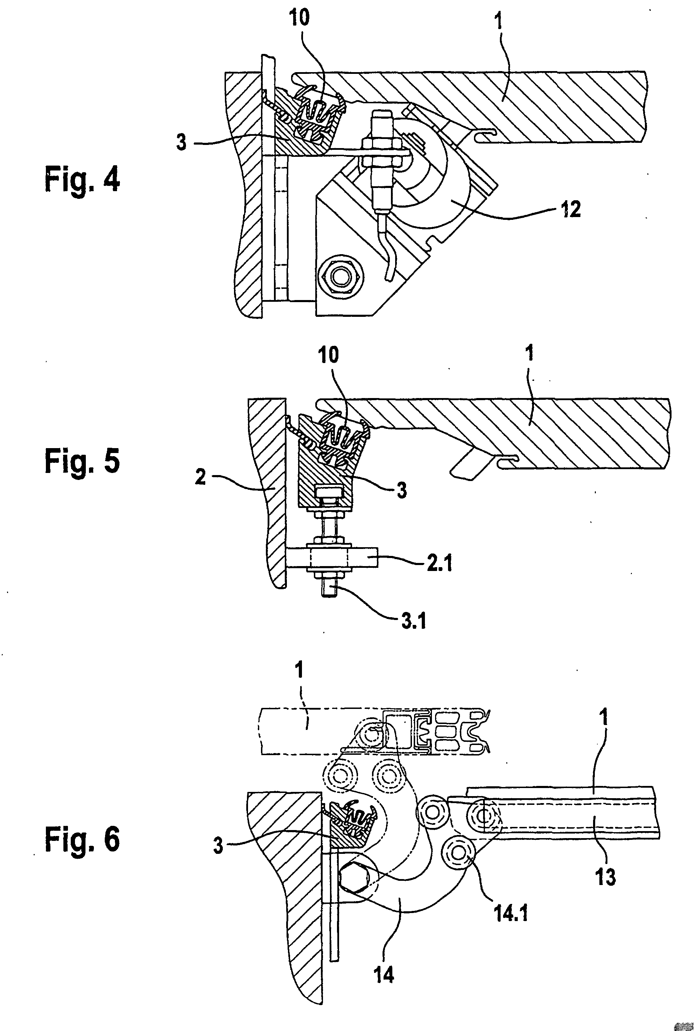

Wie aus den Fig. 1 und 6 zu erkennen, sind im unteren Bereich der Türblätter 1 bzw. 1' Führungsvorrichtungen an sich bekannter Bauart angeordnet, die jeweils einen Führungsrollen 14.1 tragenden schwenkbaren Rollenhebel 14 bzw. 14' aufweisen, wobei die Führungsrollen 14.1 in und an Führungsschienen 13 bzw. 13' geführt sind, die im unteren Bereich an den Türblättem 1 und 1' in einer Richtung parallel zu den Führungselementen 6 und 6' verlaufend angeordnet sind.

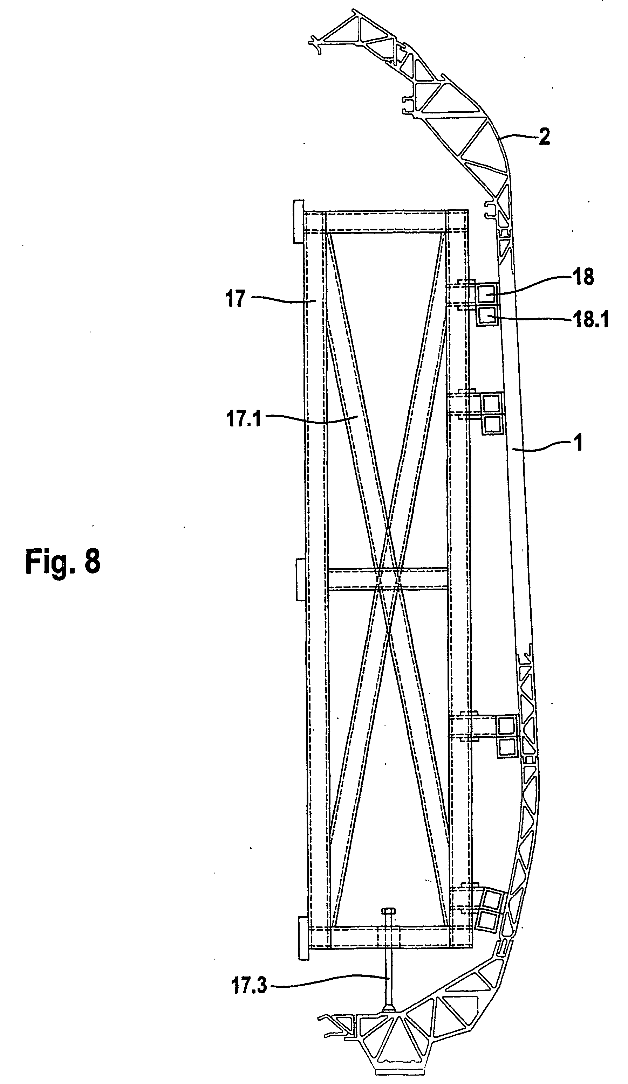

Im folgenden werden anhand Fig. 8 bis 12 ein Transportrahmen zur Montage der Schwenkschiebetür nach Fig. 1 bis 7 sowie das Montageverfahren näher erläutert.

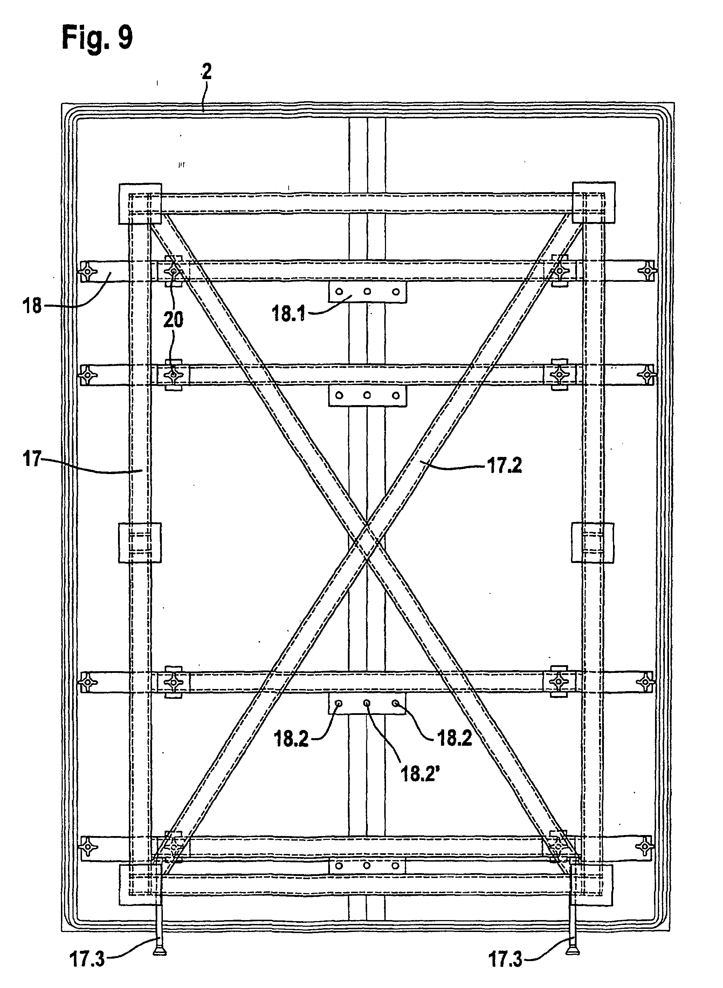

In den Fig. 8 und 9 ist der Transportrahmen als Ganzes dargestellt, wobei zur genaueren Erläuterung der Funktionsweise des Transportrahmens Teile des Türrahmens und der Türblätter dünneren Linien dargestellt sind.

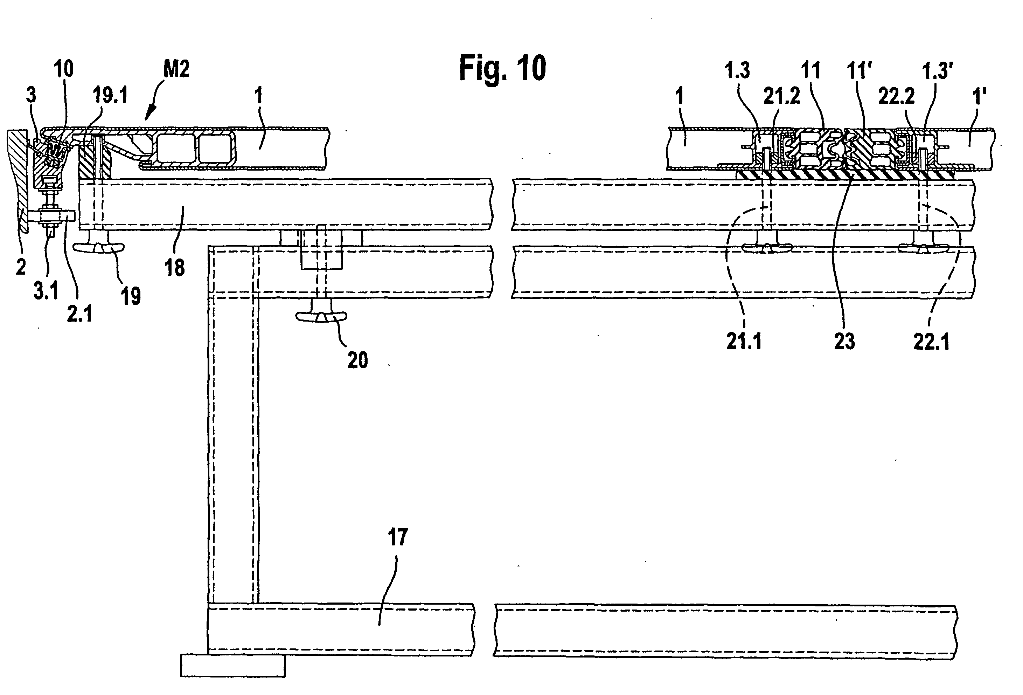

Der Transportrahmen besitzt ein im wesentlichen quaderförmiges, aus Stangen oder Schienen aufgebautes Grundgestell 17 mit Diagonalverstrebungen 17.1 und 17.2 und ist so dimensioniert, daß er, wie aus Fig. 8 und 9 ersichtlich, von außen in den Türrahmen 2 eingebracht werden kann, wobei er sich nach dem Einsetzen an der Unterseite über in der Höhe verstellbare Stützen 17.3 auf Teilen des Türrahmens 2 abstützt. An der beim Einbringen des Grundgestells 17 in den Türrahmen 2 nach außen weisenden Seite des Grundgestells 17 sind horizontal verlaufende Transportspriegel 18 angeordnet und mit dem Grundgestell 17 über Schnellspannschrauben 20 lösbar verbunden. An den Transportspriegeln 18 sind die Türblätter, wie in der Teildarstellung nach Fig. 10 zu entnehmen, ebenfalls mittels Schnellspannschrauben 19 unter Zwischenschaltung von Abstandsstücken 19.1 jeweils an ihren vertikalen Außenkanten lösbar befestigt. Da es sich um eine zweiflüglige Schwenkschiebetür handelt, müssen die Türblätter 1 und 1' auch im Bereich ihrer einander gegenüberliegenden vertikalen Schließkanten 1.3 bzw. 1.3' die, wie beschrieben, mit Fingerschutzgummis 11 und 11' versehen sind, an den Transportspriegeln 18 befestigt sein. Eine erste Ausführungsform einer derartigen Befestigung ist in Fig. 10 dargestellt. In diesem Falle sind die Türblätter 1 und 1' derart an den Transportspriegeln 18 des Grundgestells 17 angeordnet, daß sie mit den Fingerschutzgummis 11 und 11' der Schließkanten 1.3 bzw. 1.3' unmittelbar aneinander anliegen. Jedes Türblatt 1 und 1' ist im Bereich der Schließkanten 1.3, 1.3' mittels eines eigenen Gewindebolzens 21.1 und 22.1 am Befestigungsblock 18.1 des Transportspriegels 18 befestigt. Die Gewindebolzen 21.1 und 22.1 sind durch Bohrungen 18.2 (Fig. 9) im Befestigungsblock 18.1 hindurchgeführt und in ein jeweils im Türblatt angeordnetes, mit einem Gewinde versehenes Futterstück 21.2 bzw. 22.2 eingeschraubt. Zwischen den Türblättern 1 bzw. 1' und dem Transportspriegel 18 bzw. dem Befestigungsblock 18.1 ist eine, von den beiden Gewindebolzen 21.1 und 22.1 durchsetzte, den Spalt zwischen den Schließkanten 1.3 und 1.3' übergreifende Abstandsplatte 23 angeordnet.

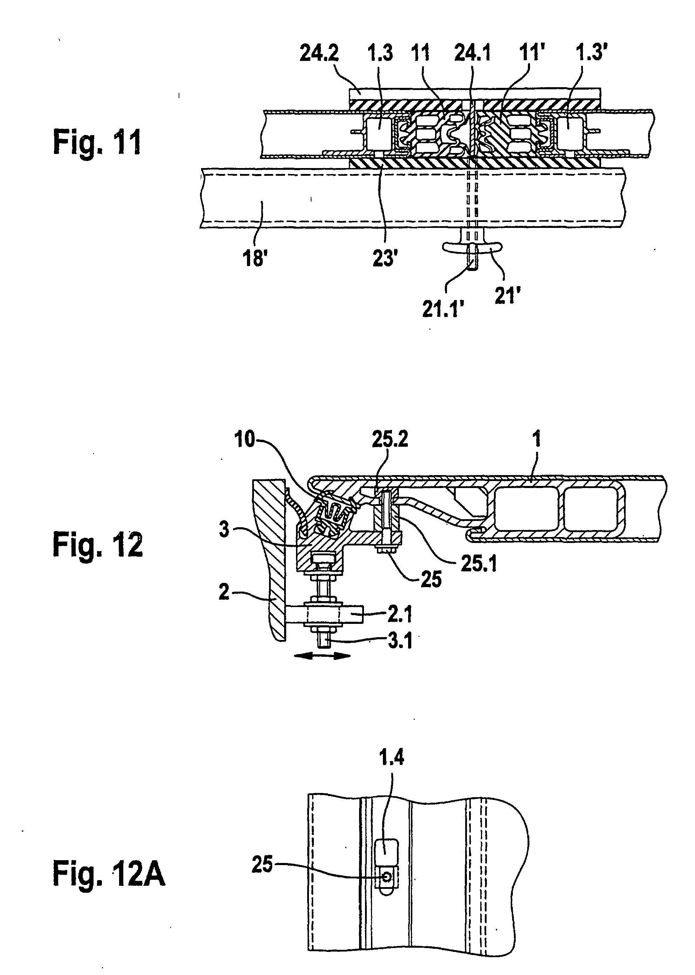

Wenn es unerwünscht ist, daß die beiden Türblätter mit den Fingerschutzgummis der Schließkanten unmittelbar aneinander anliegen, kann die Befestigung auch nach einer Variante erfolgen, die in Fig. 11 dargestellt ist. Bei dieser Anordnung sind die Fingerschutzgummis 11 und 11' an den Schließkanten 1.3 und 1.3' durch ein Abstandsblech 24.1 voneinander getrennt einander gegenüberliegend angeordnet. An der Außenkante des Abstandsblechs 24.1 ist ein, die beiden Türblätter im Bereich der Schließkanten 1.3, 1.3' übergreifender Flansch 24.2 angeordnet und mit der Innenkante des Abstandsblechs 24.1 ist das Ende eines der beiden Türblättern gemeinsamen Gewindebolzens 21.1' fest verbunden, der durch eine Bohrung 18.2' im Befestigungsblock 18.1 sowie durch eine den Spalt zwischen den Schließkanten übergreifende Abstandsplatte 23' hindurchgeführt ist und als Schnellspannschraube 21' ausgebildet ist. Beim Anziehen der Schnellspannschraube 21' wird der Flansch 24.2 von außen auf die vertikalen Schließkanten 1.3 und 1.3' der Türblätter aufgedrückt und diese an den Transportspriegeln 18' befestigt.

Der in den Türrahmen 2 einzusetzende geschlossene Portalrahmen 3 mit der umlaufenden aufblasbaren Dichtung 10 ist, wie den Fig. 12 und 12A zu entnehmen, über lösbare Schraubverbindungen 25 unter Zwischenschaltung von Abstandsstücken 25.1 direkt mit den Türblättem 1 bzw. 1' verbunden. Dabei ist, wie aus Fig. 12A zu entnehmen, der Schraubenbolzen 25 in eine Mutter 25.2 eingeschraubt, die im Türblatt 1 angeordnet ist und zwar hinter einem in einer Erweiterung endenden Langloch 1.4, so daß nach dem Lösen der Schraubverbindung 25-25.2 die Mutter 25.2 aus dem Türblatt entfernt werden kann.

Die anhand der Fig. 1 bis 7 bereits beschriebenen Bauteile der zweiflügligen Schwenkschiebetür sind in zwei Montageeinheiten zusammengefaßt, die jeweils als zusammenhängende Baueinheiten aufgebaut sind und nacheinander in den Türrahmen 2 eingesetzt und dort befestigt werden.

Eine erste Montageeinheit M1 (Fig. 7) umfaßt das Antriebs- und Führungssystem mit den Tragarmen 1.1, 1.1' und dem Parallelogrammgestänge aus den Schwenkarmen 4.1,4.1' und den Stützarmen 4.2, 4.2', sowie die Tragglieder 5.5', die Führungselemente 6, 6', die Antriebsvorrichtung 7, den Zahnriemen 8 mit den Umlenkrollen 8.1 und 8.2 und die Führungsschienen 9, 9'. Diese erste Montageeinheit wird als zusammenhängende Baueinheit im Türrahmen 2 über Befestigungswinkel 15 und 15' mittels Befestigungsschrauben 16 und 16.1 (Fig. 7) befestigt.

Eine zweite Montageeinheit besteht aus den beiden Türblättem 1 und 1', an denen der geschlossene umlaufende Portalrahmen 3 mittels der Befestigungselemente 25-25.2 befestigt ist, wobei die Türblätter 1 und 1' in der oben beschriebenen Weise am Transportrahmen 17-18 befestigt sind.

Das Montageverfahren der in den Fig. 1 bis 7 dargestellten zweiflügligen Schwenkschiebetür unter Benutzung des anhand der Fig. 8 bis 12 beschriebenen Transportrahmens läuft dann in folgenden, aufeinanderfolgenden Verfahrensschritten ab:
a) Einbringen der ersten Montageeinheit M1 in den Türrahmen 2 und befestigen mittels Schraubverbindungen 15, 16 ohne auszurichten;
b) Einbringen des Transportrahmens 17-18 mit der zweiten Montageeinheit M2 in den Türrahmen 2 und Einführen der Schraubverbindungen 3.1 des Portalrahmens 3 in Laschen 2.1 des Türrahmens 2 ohne festzuschrauben;
c) Verbinden jedes Türblattes 1 bzw. 1' der zweiten Montageeinheit M2 mit dem Antriebssystem der ersten Monateeinheit M1 (dies geschieht durch Anschließen der Türblätter 1, 1' an die Tragarme 1.1 und 1.1');
d) Ausrichten der zweiten Montageeinheit zur ersten Montageeinheit;
e) Festschrauben des Portalrahmens 3 an den Laschen 2.1 des Türrahmens 2;
f) Abschrauben des Grundgestells 17 des Transportrahmens (durch Lösen der Schnellspannschrauben 20);
g) Montieren von Verriegelungsvorrichtungen 12, 12' (Fig. 1) für jedes Türblatt 1, 1';
h) Entfernen der Transportspriegel 18 von der zweiten Montageeinheit M2 (durch Lösen der Schnellspannschrauben 19 und der Befestigungsschrauben 21.1-21.2, 22.1-22.2 bzw. 21'-21.1');
i) Lösen der Befestigungsmittel zwischen Portalrahmen 3 und jedem Türblatt 1,1' (durch Lösen der Befestigungsschrauben 25-25.2).

An einem geeigneten Punkt dieses Verfahrensablaufs, beispielsweise noch vor Verfahrensschritt a) können im unteren Bereich des Türrahmens 2 die schwenkbaren Rollenhebel 14 bzw. 14' ohne Ausrichtung montiert werden. Die Ausrichtung erfolgt dann im Lauf des Verfahrensschrittes d).

Setzungserscheinungen der Türblätter 1,1' nach dem Abnehmen der Transportspriegel 18 können durch Verdrehen von am Türhalter vorgesehenen Exzentern ausgeglichen werden.

Anschließend wird die Tür an die elektrischen und pneumatischen Zuführungen angeschlossen.

## Patentansprüche

1. Schwenkschiebetür für Fahrzeuge zur Personenbeförderung mit mindestens einem Türblatt, (1, 1'), das über ein Parallelogrammgestänge mit einem Tragglied (5, 5') verbunden ist, welches horizontal in Fahrzeuglängsrichtung auf einem Führungselemente (6, 6') verschiebbar ist, wobei die Längsbewegung des Türblatts mit der Querbewegung durch eine mit dem Türrahmen (2) fest verbundene Führungsschiene (9, 9') koordiniert ist, in welche ein mit dem Türblatt verbundenes Führungsmittel (4.3) eingreift, und mit einer Antriebsvorrichtung (7), deren Abtriebskraft über ein Übertragungselement (8) in Richtung des Führungselements (6, 6') am Tragglied (5, 5') angreift, **dadurch gekennzeichnet, daß** die Schwenkschiebetür im wesentlichen aus zwei Montageeinheiten (M1, M2) aufgebaut ist, die als jeweils zusammenhängende Baueinheiten nacheinander in den Türrahmen (2) einsetzbar und dort befestigbar sind, nämlich einer ersten Montageeinheit (M1), welche das Antriebs- und Führungssystem umfaßt und im wesentlichen aus der Antriebsvorrichtung (7) mit dem Übertragungselement (8), dem Tragglied (5, 5') mit dem Parallelogrammgestänge (4.1, 4.2, 4.1', 4.2'), dem Führungselement (6, 6'), der Führungsschiene (9, 9') und dem Führungsmittel (4.3) besteht, und einer zweiten Montageeinheit (M2), welche einen geschlossenen in den Türrahmen (2) einsetzbaren Portalrahmen (3) aufweist, an dem über demontierbare Befestigungsmittel (25-25.2) mindestens ein Türblatt (1, 1') befestigt ist.

2. Schwenkschiebetür nach Anspruch 1, **dadurch gekennzeichnet, daß** sie als zweiflüglige Tür aufgebaut ist und die erste Montageeinheit (M1) zwei Tragglieder (5, 5') mit Parallelogrammgestängen (4.1, 4.2, 4.1', 4.2'), zwei Führungselemente (6, 6'), zwei Führungsschienen (9, 9') und zwei Führungsmittel (4.3) aufweist und bei der zweiten Montageeinheit (M2) am Portalrahmen (3) zwei Türblätter (1,1') befestigt sind.

3. Schwenkschiebetür nach Anspruch 1 oder 2, **dadurch gekennzeichnet, daß** das Türblatt bzw. die Türblätter (1,1') über vollständig demontierbare Schraubenbolzen (25) am Portalrahmen (3) befestigt sind.

4. Schwenkschiebetür nach einem der Ansprüche 1 bis 3, **dadurch gekennzeichnet, daß** zur Befestigung der beiden Montageeinheiten (M1, M2) im Türrahmen (2) Schraubverbindungen (15, 16; 3.1) dienen, die eine Justierung der Lage der Montageeinheiten (M1, M2) in mindestens zwei Raumrichtungen zulassen.

5. Schwenkschiebetür nach einem der Ansprüche 1 bis 4, **dadurch gekennzeichnet, daß** die zweite Montageeinheit (M2) zum Einsetzen und Befestigen im Türrahmen (2) an einem innerhalb des Türrahmens (2) vorübergehend fixierbaren Transportrahmen (17-18) über lösbare Befestigungsmittel (19, 21.1, 22.1) befestigt ist.

6. Schwenkschiebetür nach Anspruch 5, **dadurch gekennzeichnet, daß** der Transportrahmen ein im wesentlichen quaderförmiges, aus Stangen oder Schienen aufgebautes Grundgestell (17) mit Diagonalverstrebungen (17.1, 17.2) aufweist, an dessen beim Einsetzen in den Türrahmen (2) nach außen gewandter Seite über Transportspriegel (18) das Türblatt bzw. die Türblätter (1,1') lösbar befestigt sind.

7. Schwenkschiebetür nach Anspruch 6, **dadurch gekennzeichnet, daß** das Grundgestell (17) an seiner Unterseite in der Höhe verstellbare Stützen (17.3) aufweist.

8. Schwenkschiebetür nach Anspruch 6 oder 7, **dadurch gekennzeichnet, daß** zur lösbaren Befestigung des Türblattes bzw. der Türblätter (1, 1') an den Transportspriegeln (18) und/oder zur Befestigung der Transportspriegel (18) am Grundgestell (17) Schnellspannschrauben (19, 20, 21') dienen.

9. Schwenkschiebetür nach Anspruch 6 und gegebenenfalls einem der Ansprüche 7 oder 8, **dadurch gekennzeichnet, daß** bei einer zweiflügligen Schwenkschiebetür die Türblätter (1, 1') derart an den Transportspriegeln (18) des Grundgestells (17) angeordnet sind, daß sie an den mit Fingerschutzgummis (11, 11') versehenen Schließkanten (1.3, 1.3') unmittelbar aneinander anliegen, wobei jedes Türblatt (1, 1') im Bereich der Schließkanten mittels eines eigenen Gewindebolzens (21.1, 22.1) an den Transportspriegeln (18) befestigt ist und die Gewindebolzen jeweils in im Türblatt angeordnete mit Gewinde versehene Futterstücke (21.2, 22.2) eingreifen und zwischen den Türblättern (1, 1') und jedem Transportspriegel (18) eine von beiden Gewindebolzen durchsetzte, den Spalt zwischen den Schließkanten übergreifende Abstandsplatte (23) angeordnet ist.

10. Schwenkschiebetür nach Anspruch 6 und gegebenenfalls einem der Ansprüche 7 oder 8, **dadurch gekennzeichnet, daß** bei einer zweiflügligen Schwenkschiebetür die Türblätter (1,1') derart an den Transportspriegeln (18) des Grundgestells (17) angeordnet sind, daß sie an den mit Fingerschutzgummis (11, 11') versehenen Schließkanten (1.3, 1.3') durch ein Abstandsblech (24.1) voneinander getrennt einander gegenüberliegen, wobei die Türblätter (1, 1') im Bereich der Schließkanten mittels eines gemeinsamen Gewindebolzens (21.1') an den Transportspriegeln (18') befestigt sind, wobei jeder Gewindebolzen mit der Innenkante des Abstandsblechs (24.1) fest verbunden ist und an der Außenkante jedes Abstandsblechs ein die beiden Türblätter (1, 1') im Bereich der Schließkanten übergreifender Flansch (24.2) angeordnet ist und zwischen den Türblättern (1, 1') und jedem Transportspriegel (18') eine von dem Gewindebolzen (21.1') durchsetzte, den Spalt zwischen den Schließkanten übergreifende Abstandsplatte (23') angeordnet ist.

11. Verfahren zur Montage einer Schwenkschiebetür nach einem der Ansprüche 1 bis 4 mittels eines Transportrahmens nach einem der Ansprüche 5 bis 10, **gekennzeichnet durch** die aufeinanderfolgenden Verfahrensschritte:
a) Einbringen der ersten Montageeinheit (M1) in den Türrahmen (2) und Befestigen mittels Schraubverbindungen ohne auszurichten;
b) Einbringen des Transportrahmens (17-18) mit der zweiten Montageeinheit (M2) in den Türrahmen (2) und Einführen der Schraubverbindungen (3.1) des Portalrahmens (3) in Laschen (2.1) des Türrahmens (2) ohne festzuschrauben;
c) Verbinden jedes Türblattes (1, 1') der zweiten Montageeinheit (M2) mit dem Antriebssystem der ersten Montageeinheit (M1);
d) Ausrichten der zweiten Montageeinheit (M2) zur ersten Montageeinheit (M1);
e) Festschrauben des Portalrahmens (3) an den Laschen (2.1) des Türrahmens (2);
f) Abschrauben des Grundgestells (17) des Transportrahmens;
g) Montieren von Verriegelungsvorrichtungen (12, 12') für jedes Türblatt (1, 1');
h) Entfernen der Transportspriegel (18, 18') von der zweiten Montageeinheit (M2);
i) Lösen der Befestigungsmittel (25) zwischen Portalrahmen (3) und jedem Türblatt (1, 1').

## Claims

1. Swinging-sliding door for vehicles for carrying people, with at least one door leaf (1, 1') that is connected via a parallelogram-shaped linkage to a carrying member (5, 5') that is horizontally displaceable on a guide element (6, 6') in the longitudinal direction of the vehicle, wherein the longitudinal movement of the door leaf is co-ordinated with the transverse movement by means of a guide rail (9, 9') rigidly connected to the door frame (2), in which guide rail engages a guide means (4.3) connected to the door leaf, and with a drive device (7) whose output force engages the carrying member (5, 5') via a transmission element (8) in the direction of the guide element (6, 6'), **characterised in that** the swinging-sliding door is composed substantially of two installation units (M1, M2) that, being in each case interconnected structural units, can be inserted in succession into the door frames (2) and can be secured therein, namely a first installation unit (M1) that comprises the drive system and guide system and that consists basically of the drive device (7) with the transmission element (8), the carrying member (5, 5') together with the parallelogram-shaped linkage (4.1, 4.2, 4.1', 4.2'), the guide element (6, 6'), the guide rail (9, 9') and the guide means (4.3), and a second installation unit (M2) that comprises a closed portal frame (3) that can be inserted into the door frames (2) on which portal frame is secured via dismantleable securement elements (25-25.2) at least one door leaf (1, 1').

2. Swinging-sliding door according to claim 1, **characterised in that** it is constructed as a double-leaf door and the first installation unit (M1) comprises two carrying members (5, 5') with parallelogram-shaped linkages (4.1, 4.2, 4.1', 4.2'), two guide elements (6, 6'), two guide rails (9, 9') and two guide means (4.3), and in the second installation unit (M2) two door leaves (1, 1') are secured on the portal frame (3).

3. Swinging-sliding door according to claim 1 or 2, **characterised in that** the door leaf or the door leaves (1, 1') are secured to the portal frame (3) via completely dismantleable screw bolts (25).

4. Swinging-sliding door according to one of claims 1 to 3, **characterised in that** screw connections (15, 16; 3.1) serve to secure the two installation units (M1, M2) in the door frame (2), which screw connections permit an adjustment of the position of the installation units (M1, M2) in at least two spatial directions.

5. Swinging-sliding door according to one of claims 1 to 4, **characterised in that** the second installation unit (M2) is secured, for purposes of insertion and securement in the door frame (2), via detachable securement means (19, 21.1, 22.1) to a transporting frame (17-18) that can temporarily be fixed within the door frame (2).

6. Swinging-sliding door according to claim 5, **characterised in that** the transporting frame comprises a substantially rectangular base framework (17) constructed from rods or rails with diagonal struts (17.1, 17.2), on whose outwardly-facing side the door leaf or the door leaves (1, 1') is/are detachably secured via transporting hoops (18) when the base framework is inserted into the door frame (2).

7. Swinging-sliding door according to claim 6, **characterised in that** the base framework (17) comprises on its lower side height-adjustable supports (17.3).

8. Swinging-sliding door according to claim 6 or 7, **characterised in that** quick-action screws (19, 20, 21') serve for the detachable securement of the door leaf or door leaves (1, 1') to the transporting hoops (18) and/or for the securement of the transporting hoops (18) to the base framework (17).

9. Swinging-sliding door according to claim 6 and optionally according to one of claims 7 and 8, **characterised in that** in the case of a double-leaf swinging-sliding door the door leaves (1, 1') are arranged on the transporting hoops (18) of the base framework (17) so that they directly abut one another on the closing edges (1.3, 1.3') provided with rubber finger-protection strips (11, 11'), wherein each door leaf (1, 1') is secured in the region of the closing edges by means of its own threaded bolt (21.1, 22.1) to the transporting hoops (18) and the threaded bolts in each case engage in fillers (21.2, 22.2) provided with threads and arranged in the door leaf, and between the door leaves (1, 1') and each transporting hoop (18) is arranged a spacer plate (23) traversed by both threaded bolts and spanning the gap between the closing edges.

10. Swinging-sliding door according to claim 6, and optionally according to one of claims 7 and 8, **characterised in that** in the case of a double-leaf, swinging-sliding door the door leaves (1, 1') are arranged on the transporting hoops (18) of the base framework (17) in such a way that they lie opposite one another, separated by a metal spacer sheet (24.1), on the closing edges (1.3, 1.3') provided with rubber finger-protection strips (11, 11'), wherein the door leaves (1, 1') in the region of the closing edges are secured by means of a common threaded bolt (21. 1') to the transporting hoops (18'), wherein each threaded bolt is securely connected to the inner edge of the metal spacer sheet (24.1) and on the outer edge of each metal spacer sheet is arranged a flange (24.2) spanning both door leaves (1, 1') in the region of the closing edges, and between the door leaves (1, 1') and each transporting hoop (18') is arranged a spacer plate (23') traversed by the threaded bolt (21.1') and spanning the gap between the closing edges.

11. Method for assembling a swinging-sliding door according to one of claims 1 to 4 by means of a transporting frame according to one of claims 5 to 10, **characterised by** the following successive steps:
a) insertion of the first installation unit (M1) into the door frame (2) and securement by means of screw connections without aligning the unit;
b) insertion of the transporting frame (17-18) together with the second installation unit (M2) into the door frame (2) and insertion of the screw connections (3.1) of the portal frame (3) into splice-bars (2.1) of the door frame (2), without screwing them tight;
c) connection of each door leaf (1, 1') of the second installation unit (M2) to the drive system of the first installation unit (M1);
d) alignment of the second installation unit (M2) with respect to the first installation unit (M1);
e) screwing the portal frame (3) securely to the splice-bars (2.1) of the door frame (2);
f) unscrewing the base framework (17) of the transporting frame;
g) installation of the locking devices (12, 12') for each door leaf (1, 1');
h) removal of the transporting hoops (18, 18') from the second installation unit (M2);
i) dismantling of the securement means (25) between the portal frame (3) and each door leaf (1, 1').

## Revendications

1. Portière coulissante et louvoyante pour véhicules de transport de personnes, comprenant au moins un vantail de portière (1, 1') qui est relié, par l'intermédiaire d'un système à parallélogramme, à un organe de support (5, 5') qui peut coulisser horizontalement dans la direction longitudinale du véhicule sur un élément de guidage (6, 6'), le mouvement longitudinal du vantail de portière étant coordonné au mouvement transversal par une glissière de guidage (9, 9') qui est reliée de manière fixe au dormant de portière (2) et dans laquelle vient s'engager un moyen de guidage (4, 3) lié au vantail de portière, l'ensemble comprenant également un dispositif d'entraînement (7) dont la force de sortie agit sur l'organe de support (5, 5') par l'intermédiaire d'un élément de transmission (8) en direction de l'élément de guidage (6, 6'),
**caractérisée en ce que** la portière coulissante et louvoyante est construite essentiellement sous la forme de deux modules de montage (M1, M2), qui, respectivement sous forme de modules de construction d'un seul tenant peuvent être insérés successivement dans le dormant de portière (2) et y être fixés, à savoir un premier module de montage (M1) qui comprend le système d'entraînement et de guidage et est constitué essentiellement du dispositif d'entraînement (7) avec l'élément de transmission (8), de l'organe de support (5, 5') avec le système de parallélogramme (4.1, 4.2, 4.1', 4.2'), de l'élément de guidage (6, 6'), de la glissière de guidage (9, 9') et du moyen de guidage (4.3), ainsi qu'un second module de montage (M2) qui comprend un cadre en portique (3) fermé qui peut être placé dans le dormant de portière (2) et sur lequel est fixé au moins un vantail de portière (1, 1') par l'intermédiaire de moyens de fixation (25-25.2) démontables.

2. Portière coulissante et louvoyante selon la revendication 1, **caractérisée en ce qu'**elle est réalisée en tant que portière à deux vantaux, et le premier module de montage (M1) comporte deux organes de support (5, 5') avec systèmes de parallélogramme (4.1, 4.2, 4.1', 4.2'), deux éléments de guidage (6, 6'), deux glissières de guidage (9, 9') et deux moyens de guidage (4.3), et deux vantaux de portière (1, 1') étant fixés sur le cadre en portique (3) dans le second module de montage (M2).

3. Portière coulissante et louvoyante selon la revendication 1 ou 2, **caractérisée en ce que** le vantail de portière ou les vantaux de portières (1, 1') sont fixés au cadre en portique (3) par l'intermédiaire de broches ou boulons à visser (25) entièrement démontables.

4. Portière coulissante et louvoyante selon l'une des revendications 1 à 3, **caractérisée en ce que** pour la fixation des deux modules de montage (M1, M2) dans le dormant de portière (2), sont utilisées des liaisons à vis (15, 16 ; 3.1) qui autorisent un ajustement de la position des modules de montage (M1, M2) dans au moins deux directions de l'espace.

5. Portière coulissante et louvoyante selon l'une des revendications 1 à 4, **caractérisée en ce que** le second module de montage (M2) pour la mise en place et la fixation dans le dormant de portière (2), est fixé, par l'intermédiaire de moyens de fixation démontables (19, 21.1, 22.1), sur un cadre de transport (17-18) pouvant être fixé provisoirement à l'intérieur du dormant de portière (2).

6. Portière coulissante et louvoyante selon la revendication 5, **caractérisée en ce que** le cadre de transport présente un châssis de base (17) sensiblement de forme quadrangulaire, construit à partir de barres ou de rails avec des contre-fiches diagonales (17.1, 17.2), et sur le côté duquel, dirigé vers l'extérieur lors de la mise en place dans le dormant de portière (2), est ou sont fixés de manière démontable le vantail ou les vantaux de portières (1, 1'), par l'intermédiaire d'arceaux de transport (18).

7. Portière coulissante et louvoyante selon la revendication 6, **caractérisée en ce que** le châssis de base (17) présente sur son côté inférieur, des appuis de support (17.3) réglables en hauteur.

8. Portière coulissante et louvoyante selon la revendication 6 ou 7, **caractérisée en ce que** pour la fixation amovible du vantail de portière ou des vantaux de portières (1, 1') sur les arceaux de transport (18) et/ou pour la fixation des arceaux de transport (18) sur le châssis de base (17), on utilise des vis à serrage rapide (19, 20, 21').

9. Portière coulissante et louvoyante selon la revendication 6 et, le cas échéant, l'une des revendications 7 ou 8, **caractérisée en ce que** dans le cas d'une portière coulissante et louvoyante à deux vantaux, les vantaux de portière (1, 1') sont agencés sur les arceaux de transport (18) du châssis de base (17) de manière telle, qu'ils s'appuient directement l'un contre l'autre au niveau de leurs bords de fermeture (1.3, 1.3') pourvus de caoutchoucs de protection contre le pincement des doigts (11, 11'), chaque vantail de portière (1, 1'), dans la zone des bords de fermeture, étant fixé au moyen de sa propre broche filetée (21.1, 22.1) aux arceaux de transport (18), les broches filetées s'engageant dans des cales de garnissage (21.2, 22.2) pourvues d'un taraudage, et une plaque entretoise (23), qui surmonte l'interstice entre les bords de fermeture et est traversée par les deux broches filetées, étant disposée entre les vantaux de portières (1, 1') et chaque arceau de transport (18).

10. Portière coulissante et louvoyante selon la revendication 6 et, le cas échéant, l'une des revendications 7 ou 8, **caractérisée en ce que** dans le cas d'une portière coulissante et louvoyante à deux vantaux, les vantaux de portière (1, 1') sont agencés sur les arceaux de transport (18) du châssis de base (17) de manière telle, qu'ils soient en regard l'un de l'autre en étant séparés par une tôle entretoise (24.1) au niveau de leurs bords de fermeture (1.3, 1.3') pourvus de caoutchoucs de protection contre le pincement des doigts (11, 11'), les vantaux de portières (1, 1'), dans la zone des bords de fermeture, étant fixés aux arceaux de transport (18') au moyen d'une broche filetée commune (21.1'), chaque broche filetée étant reliée de manière fixe au bord intérieur de la tôle entretoise (24.1), et un flasque (24.2) qui surmonte les deux vantaux de portière (1, 1') dans la zone des bords de fermeture, étant disposé sur le bord extérieur de chaque tôle entretoise, et une plaque entretoise (23') qui surmonte l'interstice entre les bords de fermeture et est traversée par la broche filetée (21.1'), étant disposée entre les vantaux de portière (1, 1') et chaque arceau de transport (18').

11. Procédé de montage d'une portière coulissante et louvoyante selon l'une des revendications 1 à 4, au moyen d'un cadre de transport selon l'une des revendications 5 à 10, **caractérisé par** les étapes de procédé successives suivantes :
a) mettre en place le premier module de montage (M1) dans le dormant de portière (2) et le fixer au moyen de liaisons à vis, sans ajustement ;
b) mettre en place le cadre de transport (17-18) avec le second module de montage (M2) dans le dormant de portière (2), et insérer les liaisons à vis (3.1) du cadre en portique (3) dans des pattes (2.1) du dormant de portière (2), sans serrer les liaisons à vis ;
c) relier chaque vantail de portière (1, 1') du second module de montage (M2) au système d'entraînement du premier module de montage (M1) ;
d) ajuster le second module de montage (M2) par rapport au premier module de montage (M1) ;
e) serrer le cadre en portique (3) sur les pattes (2.1) du dormant de portière (2) ;
f) dévisser le châssis de base (17) du cadre de transport ;
g) monter des dispositifs de verrouillage (12, 12') pour chaque vantail de portière (1, 1') ;
h) retirer les arceaux de transport (18, 18') du second module de montage (M2) ;
i) désolidariser les moyens de fixation (25) entre le cadre en portique (3) et chaque vantail de portière (1, 1').
